# EUROPEAN PATENT APPLICATION

(11) **EP 3 583 832 A1**
(43) Date of publication of application: **25.12.2019**
(21) Application number: 19180868.2
(22) Date of filing: 18.06.2019
(51) Int. Cl.: A01C 23/04, A01M 7/00, B05B 5/03

(54) **SPRAYING APPARATUS AND METHOD FOR SPRAYING CROPS**

(30) Priority: 18.06.2018 NL 2021144
(71) Applicant: Buisman Beheer, 4116 CE Buren (NL)
(72) Inventor: Buisman, Jan Hendrik Tacoma, 4116 CE Buren (NL)
(74) Representative: V.O.

(57) **Abstract**

A spraying apparatus (1) for spraying a crop comprises a spray head (3) which is configured to receive a crop treatment substance (7) from a supply channel (11) and to atomize it. The spraying apparatus (1) comprises an electrostatic charger (5) to charge the crop treatment substance electrostatically. The spraying apparatus (1) further comprises an air stream generator (8) for generating an air stream such that the air stream can entrain the atomized and charged crop treatment substance (11) to the crop.

## Description

The present invention relates to a spraying apparatus for spraying a crop, comprising a spray head which is configured to receive a crop treatment substance from a supply channel and to atomize it, and an electrostatic charger for electrostatically charging the crop treatment substance. The present invention further relates to a method for spraying a crop.

In agriculture and horticulture, crop treatment substances form an indispensable means during crop development. For instance, practically all crops are supplied with water for growth. Typically, also, the water is mixed with an additive such as an extra nutrient or supplement, or a crop protection substance so as to increase harvest quantity and harvest reliability, respectively. For a proper distribution of the crop treatment substance over one or more specimens of the crop at the same time, conventionally, the starting point is a spraying apparatus with which a crop treatment substance, for example, water with optionally one or more additives dissolved therein, is passed under pressure out of a nozzle of a spray head of the apparatus, whereby mist is obtained. The aboveground part of the plant is then exposed to the mist in order for the crop treatment substance to be deposited in the form of microdrops on an outer surface of the crop, thereby allowing the crop treatment substance to be absorbed by the crop. During spraying and deposition of the crop treatment substance, a part of the drops formed in the mist come into contact with each other so that they coalesce and form larger drops which, *inter alia* due to their weight, under the influence of gravity, easily roll off the outer surface of the crop. This holds all the more so if the crop has a relatively smooth outer surface, as, for example, in the case of so-called 'greasy' plants which comprise at their outer surface a smooth, greasy coating. In this way, a part of the sprayed crop treatment substance is not absorbed by the plant. Moreover, the larger coalesced drops cover a smaller and less distributed part of the total outer surface of the plant as a result of which other parts of the plant remain uncovered. For an optimum treatment of the crop, however, it is desired for the crop to take up an amount of the crop treatment substance on a largest possible part of its total outer surface. In the pursuit of this endeavor, often an excess of crop treatment substance is sprayed over the crop. Such excessive use of crop treatment substances such as water and one or more additives is a waste for both economic reasons and environmental reasons. For counteracting the coalescence of drops of mist into larger drops, a spraying apparatus is known that utilizes an electrostatic charger which gives the crop treatment substance released by the spray head a homopolar electrostatic charge. Herein, an electrostatic charger is understood to be a means with which a static charge can be imparted to a subjected medium, such as a passing stream of crop treatment substance. By providing each microdrop with a homopolar electric charge, the tendency of discrete microdrops to coalesce is counteracted. The state of the discrete microdrops having a homopolar electric charge creates a repellent effect between the microdrops so that the mist remains dispersed. This improves adhesion of the microdrops to, and their even distribution on the plant. While the known electrostatic spraying apparatus reduces a coalescence of microdrops on the crop surface, a drawback of the apparatus is that parts of the plant that are difficult to reach, such as a side of the crop facing away from the spray head, for example an underside of a leaf, is not, or not sufficiently, exposed to the crop treatment substance. This is why there is still no optimum treatment of the crop.

One object of the present invention is therefore to provide a crop spraying apparatus that meets the drawback mentioned.

In particular, there is a need for a crop spraying apparatus that effects an even distribution of crop treatment substance on a crop. More particularly, the crop spraying apparatus consumes less crop treatment substance, and preferably with an even distribution of the crop treatment substance on the total surface of the crop. It is thus a particular object of the present invention to provide such an apparatus.

To meet one or more of the objects contemplated, a spraying apparatus for spraying crops of the type mentioned in the opening paragraph is characterized in that the spraying apparatus comprises an air stream generator for generating an air stream such that the air stream can entrain the atomized crop treatment substance released at the spray head, in charged form. In the spraying apparatus according to the present invention, the generated air stream can entrain the mist and give direction to it. As a result, the crop can be sprayed in a directed manner, for example from multiple positions with respect to the crop. A crop can then be sprayed from a top, side or a bottom, against gravity. Turbulence in the air stream, for example due to an interaction of the air stream with the crop, can promote the mist ending up in places difficult to reach. It is then possible to provide a system with multiple spraying apparatuses according to the present invention positioned with respect to each other and with respect to the crop in such a manner as to stimulate turbulence of the air stream in the vicinity of the crop. Turbulence may be effected, for example, by disposing the nozzles of multiple spraying apparatuses stepwise with respect to each other and/or facing each other. By an interaction of the air streams at a crossing point of the air streams, turbulence can be created so that crop treatment substance can be deposited also at surfaces or parts of the crop that are difficult to reach, such as a side of the crop facing away from the spray heads, for example, an underside of a leaf. For the purpose of spraying crops that are grown on plates, the air stream or a part thereof can be directed at a bottom so as to reach the underside of the crop better through reflection. Air support of the mist also promotes a further distribution of the crop treatment substance in the mist, thus allowing the content of crop treatment substance, in particular water, in the mist to be drastically lowered. In this way, in total, less water is needed for spraying a crop than with conventional ways of spraying. The spray head of the spraying apparatus may be configured to atomize the crop treatment substance whereby an aerosol is obtained where the droplet size can be about 50-100 microns. The electrostatic charger is configured to charge the crop treatment substance electrostatically, such that at least a part of the microdrops in the mist are provided with a homopolar electrical charge. Discrete microdrops in the mist consequently remain separated from each other better, thus lowering the chances of drop formation by coalescence of multiple microdrops. In addition, the repellent effect of the homopolarly charged microdrops also induces dispersal of the mist, i.e., expansion of the mist, so that the microdrops spread on a larger part of the total crop surface. The electrostatic charge of the microdrops furthermore promotes adhesion of the microdrops to the plant, thus counteracting rolling off. Due to the crop treatment substance thus being distributed more evenly and more proportionally over the at least substantially complete crop surface, in addition to use of water being lowered, also an amount of additive such as a nutrient or crop protection product can be reduced. The crop treatment substance can comprise, for example, a single substance for treating a crop, for example, a nutrient such as water, or a crop protection product. Also, the crop treatment substance can comprise a mixture of multiple substances, such as a mixture of different nutrients and/or crop protection products. The crop treatment substance can comprise, for example, water, provided with one or more additives. Additives may be understood to include, for example, crop protection products and/or other nutrients for crops.

In a further embodiment, the spraying apparatus according to the invention comprises an air guide, which is configured to guide the air stream. The air guide is preferably configured to guide the air stream along the spray head whereupon the air stream entrains the mist substantially in a guiding direction of the air guide. Preferably, the air guide comprises a guiding element, such as a hollow tubular element or a tube, which extends around the spray head. The spray head, for example, may at least partly be provided in a cavity of the tubular guiding element. Optionally, the guiding element forms at least a part of the housing or the complete housing of the spraying apparatus so as to keep the spraying apparatus relatively compact in dimension, and lightweight.

In a particular embodiment, the electrostatic charger of the spraying apparatus according to the invention is provided around the spray head. The electrostatic charger can comprise, for example, a thin layer of conductive material, such as a foil consisting of, or comprising, conductive material, for example a copper foil, which is provided around the spray head. The thin layer of conductive material may be coupled to a supply source to pass a charge through the material, so that a stream of the crop treatment substance that is being passed along the material is electrostatically charged. It is possible that the electrostatic charger is ring-shaped and is provided adjacent an outlet side of the spray head. Preferably, the electrostatic charger is provided on an inside of the air guide. In particular, the electrostatic charger is a thin layer, coating or foil of conductive material that, within a cavity of the air guide, is attached against the air guide at least substantially in planar contact with an inner side of the air guide. Thus, the crop treatment substance passes the electrostatic charger in the air guide so that it is effectively statically charged.

A further particular embodiment of the spraying apparatus according to the invention has as a feature that the spray head at a spray head mouth releases a crop treatment substance in a direction of the air guide, while upstream of the spray head the air generator is provided within the air guide. In a further particular embodiment thereof, the electrostatic charger is provided downstream of the spray head, within the air guide. Thus, the air guide forms a housing around the spray head, while within the housing an air stream coming from the air generator is guided through the stream of crop treatment substance released at the spray head, in order to entrain the treatment substance along the downstream electrostatic charger before delivering the thus electrostatically charged stream in mist form to an end of the air guide.

In a further particular embodiment of the spraying apparatus according to the invention, the air generator is characterized in that it comprises a fan. The air generator can generate an air stream in the direction of the spray head. An air stream generated by a fan has as an advantage that it creates air whirls in the air stream due to the rotors of the fan rotating. As a result, the entrained mist can also reach spots of the crop that are difficult to reach. Moreover, the air whirls assist in electrostatically charging the stream of crop treatment substance, thereby promoting a microdrop formation and atomization. A fan, moreover, can be provided within a housing of the spraying apparatus in a simple manner. Alternatively, the air generator could comprise a compressed air container.

A further preferred embodiment of the spraying apparatus according to the invention has as a feature that the spraying apparatus furthermore comprises a pressure pump for supplying crop treatment substance to the spray head, while the spray head comprises a nozzle on an outlet side of the spray head, configured to atomize the crop treatment substance. The pressure pump can supply the crop treatment substance to the spray head under high pressure. The nozzle is configured such that crop treatment substance can be atomized under the influence of the pressure of the spraying medium built up by the pressure pump. As the atomized crop treatment substance can be entrained by a generated air stream, the content of water in the mist can be drastically lowered with respect to known spraying installations. In addition, the pump power can also be lowered.

In a further embodiment of the spraying apparatus according to the invention, the spraying apparatus comprises a dosing unit which is configured to add additive to the crop treatment substance in a dosed manner. In this way, the crop treatment substance and the additive can be kept, and stored, separately from each other. Preferably, the dosing unit comprises an injection pump which is configured to inject an amount of crop treatment substance into a supply channel of the spray head in a dosed manner. It is also possible that the supply channel solely supplies a crop treatment substance to the spray head. Possibly, the additive is added in a chamber of the spray head, before the additive, mixed into the stream of crop treatment substance, is atomized. The spraying apparatus may comprise a sensor for measuring a parameter in the supply channel of the spray head, while the injection pump is configured to inject an amount of crop treatment substance into the supply channel depending on the measured parameter. The supply channel can for instance supply water from a water reservoir to the spray head, while the injection pump is configured to inject an amount of crop treatment substance into the supply channel at an injection location between the water reservoir and the spray head. The sensor can be, for example, a flow sensor which is configured to measure a flow rate in the supply channel to the spray head. A flow sensor is preferably positioned upstream of the injection location. The sensor can also be a concentration sensor, configured to measure in the supply channel a concentration of a particular substance in the crop treatment substance. The injection pump may be configured to maintain a constant ratio of additive to water in the crop treatment substance in the supply channel on the basis of the measured parameter in the supply channel to the spray head.

Preferably, the dosing unit comprises a processor which is configured to control the dosing unit and in particular the injection pump. Furthermore, the dosing unit preferably comprises a memory for at least storing sensor data of the sensor. The processor can communicate with the memory and may be configured to control the injection pump. In addition, the processor may also be configured to control the pressure pump of the spraying apparatus. The processor can control the injection pump to add an amount of additive to the crop treatment substance in the supply channel to the spray head. The amount of additive may depend on the sensor data. The amount of additive depends, for example, on the flow rate in the supply channel to the spray head. The memory can be a readable and (re)writable memory and can comprise, for example, a lookup table or database in which for one or more sensor data a corresponding amount of additive to be added is stored. The memory can comprise one or more preprogrammed ratios of additives for the crop treatment substance. The ratios may, for instance, vary, as desired, depending on one or more factors such as type of crop to be sprayed, moment of spraying, amount of simultaneously operative spraying apparatuses during a spraying of the crop, flow rate measured with flow meter and/or quantity of the stream of crop treatment substance, and so forth. The processor can control the injection pump to add a particular amount of additive in the supply channel to the spray head depending on the sensor data and a preprogrammed ratio. The spraying apparatus may be preprogrammed for at least partly fully-automatically mixing a desired amount of additive into the crop treatment substance, and/or can comprise an interface allowing a user of the apparatus to manually select a desired amount.

The present invention furthermore relates to a method for spraying crops, comprising the mixing of water and an additive in a predetermined ratio; atomizing the mixture; electrostatically charging the mixture; entraining of the atomized and electrostatically charged mixture by a generated air stream. Preferably, turbulence is created in the air stream, for example by means of a fan, in order to have the mist adhere to spots of the crop that are difficult to reach.

In a particular embodiment of the method according to the invention, multiple air streams are generated which are aimed at the crop from individually different angles. By the interaction of multiple air streams, turbulence is created in the vicinity of the crop. As a result, in the vicinity of the crop, multiple stream directions can come about, which can deposit the mist on practically the whole surface of the crop, also on spots hard to reach, so that a proportional and even distribution of the crop treatment substance can be obtained. For instance, multiple spraying apparatuses may be used to spray the plant from multiple positions. Also, a single spraying apparatus may be used which comprises multiple air stream generators. These air stream generators can be positioned differently with respect to each other to create air whirls in the vicinity of the crop.

In a particular embodiment of the method according to the invention, the method is characterized in that the crop is sprayed from a movable installation on which the spraying apparatus is provided. In this manner, the plant can be sprayed from multiple positions. Also, on the movable installation, multiple spraying apparatuses may be provided. The movable installation can be a manageable installation.

The invention will be further elucidated on the basis of an exemplary embodiment which is represented in a drawing. In the drawing:
Fig. 1A shows a schematic representation of a side view of a spraying apparatus;
Fig. 1B shows a schematic representation of a front view of a spraying apparatus;
Fig. 2 shows a schematic view of a pressure pump and a dosing unit of a spraying apparatus.

It is noted that the figures are only representations of a preferred embodiment of the invention, and that they are given by way of a non limiting implementation example. In particular, some parts and dimensions may be represented exaggeratedly to a greater or lesser extent, for the sake of clarity.

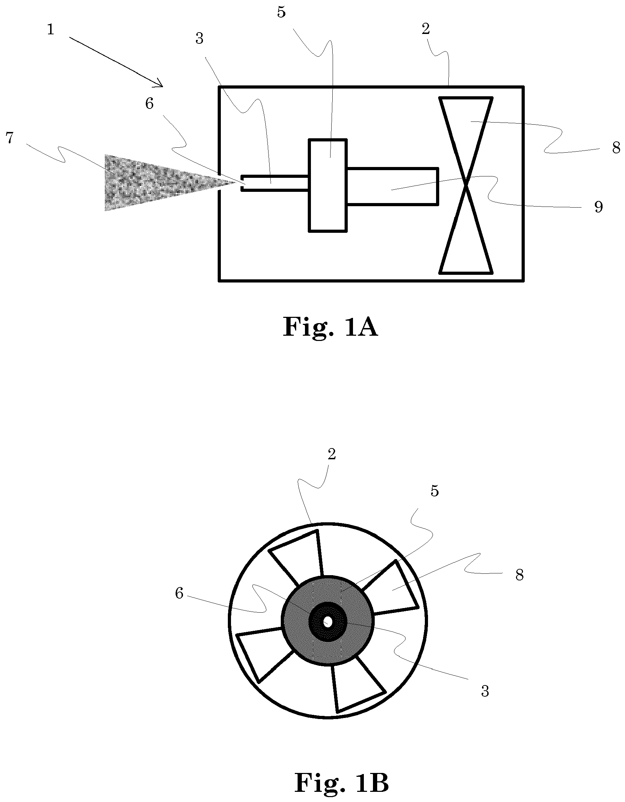

In Figure 1A a schematic side view of a spraying apparatus 1 is shown. The spraying apparatus comprises a tubular air guide 2 which also serves as housing of the apparatus. In the cavity of the air guide 2, on a central axis of the tubular air guide 2, a spray head 3 is included. Also, an electrostatic charger 5 is included within the air guide 2 in the vicinity of the spray head 3. A nozzle 6 forms an outlet of the spray head 3, through which a crop treatment substance 7 is passed under pressure, such that the crop treatment substance 7 is atomized. Possibly, the electrostatic charger 5 can form an integral body with the air guide 2, or be provided as an electrically conductive part on the air guide 2. Also, the electrostatic charger 5 can form an integral body with the spray head 3, or be provided as an electrically conductive part on the air guide 2. The electrostatic charger is provided at the location of the spray head 3 in the vicinity of the nozzle 6 and can be charged electrostatically. The electrostatic charger can for instance have been electrostatically charged by applying a voltage of about 10 K volts to the electrostatic charger, while the electrostatic charger is able impart at least a part of its charge to a crop treatment substance 7, such that discrete microdrops after atomization of the crop treatment substance 7 are homopolarly charged. The electrostatic charger can be positively or negatively charged. The mist 7 is actively sprayed by the spray head 3 in a direction through an outlet side of the tubular air guide 2. In addition, in the cavity of the tubular air guide, furthermore an air stream generator 8 is provided upstream of the nozzle 6. The air stream generator 8 can be a fan which is driven by a drive module 9 such as an electric motor, preferably a DC motor. The drive module 9 may also be configured to charge the electrostatic charger 5 electrostatically. The propellers of the fan 8 are at least substantially equal to the radius of the tubular air guide 2 so that an air stream can be generated which entrains the atomized crop treatment substance out of the air guide 2. Possibly, the air stream generator 8 is provided outside the air guide 2. Preferably, the spray direction of the spray head 3 is equal to the flow direction of the generated air stream of the fan 8.

In Figure 1B, a schematic front view of the spraying apparatus 1 is shown in which the electrostatic charger 5 and the air guide 2 are concentrically disposed around the spray head 3.

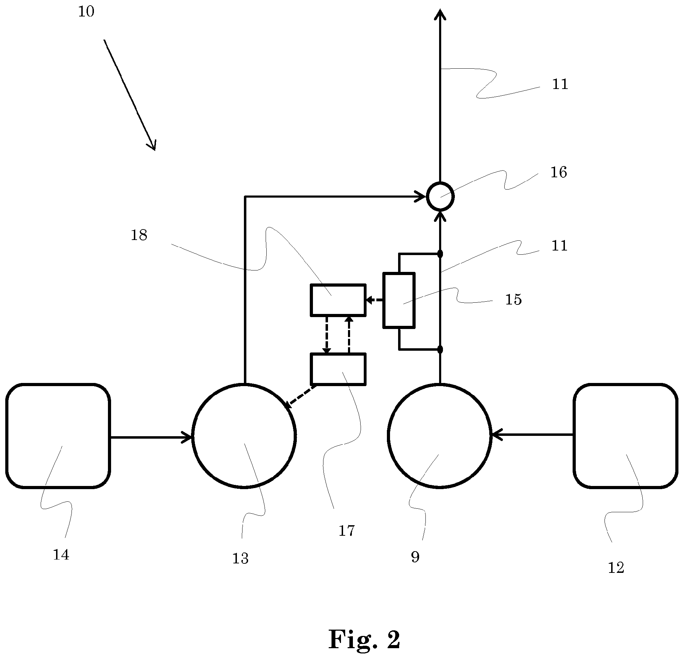

In Figure 2 a schematic view of a pressure pump 9 and a dosing unit 10 of a spraying apparatus is shown. The pressure pump 9 is configured to pass water and/or a crop treatment substance to the spray head 3 via a supply channel 11. The pressure pump can supply a power of, for example, about 150 watts. The supply channel opens into the spray head 3 where the water and/or crop treatment substance can be atomized by means of the nozzle 6. The pressure pump 9 can supply water from a water reservoir 12 to the spray head 3 via the supply channel 11. The dosing unit 10 is configured to add one or more additives to the crop treatment substance in a dosed manner. Additives can comprise crop protection products and nutrients for crops. The dosing unit 10 comprises an injection pump 13 for dosed addition of an additive into the supply channel 11 to the spray head 3. The additive can be kept in an additive reservoir 14 and be added in a dosed manner into the supply channel 11, for instance between the water reservoir 12 and the pressure pump 9. The additive can also be added in the pressure pump 9. The dosing unit further comprises a sensor 15 for measuring a parameter in the supply channel. The sensor 15 comprises a flow sensor for measuring a flow rate in the supply channel. However, the sensor 15 could also comprise a concentration sensor for measuring a concentration of an additive in the supply channel. The sensor 15 is positioned between the water reservoir 12 and an injection location 16, the injection location 16 being the location where the additive is passed into the supply channel 11. Alternatively, the sensor 15 can be placed downstream of the injection location 16, i.e., at a location of the supply channel 11 between the injection location 16 and the spray head 3. Sensor data of the sensor 15 can be stored in a memory 18. A processor 17 is provided to process the sensor data. The processor 17 is furthermore configured to control the injection pump 13 and/or the pressure pump 9. Control of the injection pump can be done on the basis of the sensor data whether or not stored in the memory 18. The injection pump 13 can be controlled by the processor 17 to add a particular amount of additive to the supply channel 11, such that a predetermined ratio of additive is obtained in the supply channel 11. In the memory 18, one or more preprogrammed ratios can be preprogrammed. Preprogrammed ratios can be, for example, ratios of a number of different additives in the supply channel. Also, preprogrammed ratios may be stored in the memory for different crops. The processor could also control multiple injection pumps and/or pressure pumps.

## Claims

1. A spraying apparatus for spraying a crop, comprising
a spray head which is configured to receive a crop treatment substance from a supply channel and to atomize it, and
an electrostatic charger for electrostatically charging the crop treatment substance,
**characterized in that** the spraying apparatus comprises an air stream generator for generating an air stream such that the air stream can entrain the atomized and charged crop treatment substance.

2. The spraying apparatus according to claim 1, further comprising an air guide which is configured to guide the air stream at least along the spray head.

3. The spraying apparatus according to claim 2, wherein the air guide comprises a tubular element which extends around the spray head.

4. The spraying apparatus according to one or more of the preceding claims, wherein the electrostatic charger comprises a layer of conductive material which extends around the spray head.

5. The spraying apparatus according to one or more of the preceding claims, wherein the air stream generator comprises a fan.

6. The spraying apparatus according to one or more of the preceding claims, furthermore comprising a pressure pump for supplying crop treatment substance under pressure to the spray head.

7. The spraying apparatus according to one or more of the preceding claims, furthermore comprising a dosing unit which is configured to add an additive to the crop treatment substance in a dosed manner.

8. The spraying apparatus according to claim 6 or 7, comprising a sensor for measuring a parameter in the supply channel of the spray head, which sensor is communicatively connected with the pressure pump to pass an amount of crop treatment substance to the spray head depending on the measured parameter and/or with the dosing unit to inject an amount of additive into the supply channel depending on the measured parameter.

9. The spraying apparatus according to claim 8, wherein the sensor comprises a flow sensor to measure a rate of flow of the crop treatment substance in the supply channel as a parameter.

10. The spraying apparatus according to one or more of claims 6-9, furthermore comprising a processor configured to control at least one of the pressure pump, the dosing unit or the sensor.

11. The spraying apparatus according to one or more of claims 6-10, furthermore comprising a memory for storing data, in particular sensor data of the sensor.

12. A method for spraying a crop, comprising
mixing of a crop treatment substance with an additive in a predetermined crop-dependent ratio,
electrostatically charging and atomizing of the mixture,
entraining of the atomized and electrostatically charged mixture by a generated air stream to the crop.

13. The method according to claim 12, wherein turbulence is created in the generated air stream for a dispersing of the atomized mixture.

14. The method according to claim 12 or 13, wherein the crop is sprayed from different angles.

15. The method according to one or more of claims 12-14, wherein multiple air streams are generated which are aimed at the crop from individually different angles.

16. The method according to one or more claims 12-15, wherein the crop is sprayed from a movable installation on which at least one spraying apparatus according to one or more of claims 1-11 is provided.
